# EUROPEAN PATENT APPLICATION

(11) **EP 4 563 254 A1**
(43) Date of publication of application: **04.06.2025**
(21) Application number: 23846324.4
(22) Date of filing: 19.07.2023
(51) Int. Cl.: B09B 3/70, B09B 101/67

(54) **TREATMENT METHOD FOR USED SANITARY GOODS**

(30) Priority: 25.07.2022 JP 2022118123
(71) Applicant: Kurita Water Industries Ltd., Tokyo 164-0001 (JP)
(72) Inventor: UMEMOTO, Mayu, Tokyo 164-0001 (JP); TOKUTOMI, Takaaki, Tokyo 164-0001 (JP); YAMAGUCHI, Daisuke, Tokyo 164-0001 (JP)
(74) Representative: Hoffmann Eitle
(86) International application number: PCT/JP2023/026424
(87) International publication number: WO 2024/024593

(57) **Abstract**

This treatment method for used sanitary goods uses a treatment device that comprises: a rotary drum 4 which stores the used sanitary goods; a water tank 3 which houses the rotary drum therein; a water feeding pipe 10 through which water is fed into the water tank 3; and a passage 12 for discharging water from the water tank 3. The method involves: inputting, into the rotary drum 4, used sanitary goods and an individually packaged chemical having a chemical accommodated in a container; and rotating the rotary drum 4 to cause the container to break to let the chemical diffuse within the rotary drum.

## Description

### Technical Field

The present invention relates to a treatment method for used sanitary goods such as used disposable diapers. One aspect of the present invention relates to a method for adding chemicals used in a treatment process for sterilizing, washing, and sorting used sanitary goods.

### Related Art

It is desired to sterilize, wash, and sort used sanitary goods such as used disposable diapers and urine pads, rather than incinerating or landfilling them.

Patent Document 1 describes a process in which used disposable diapers, a decomposing agent (slaked lime), water, and a disinfectant (hypochlorous acid) are placed in a rotating drum and processed while rotating, thereby separating the materials constituting the disposable diapers into their respective components.

Specifically, the treatment device described in Patent Document 1 includes a separator into which used disposable diapers and decomposition water (water containing slaked lime and disinfectant) for decomposing the used disposable diapers are input, and which mixes the input decomposition water and used diapers to separate the used disposable diapers into multiple types of materials and separate the waste from the used disposable diapers and dehydrates the multiple types of materials; a discharging portion that discharges wastewater containing waste along with the decomposition water from inside the separator to the outside; and a sorter into which the materials separated by the separator are input and which enables sorting of at least pulp and plastic constituting the disposable diapers by drying them.

Patent Document 2 describes improving the treatment efficiency when treating used sanitary goods using this treatment device by pre-soaking the used sanitary goods with water to achieve a predetermined weight.

### Citation List

### Patent Document

Patent Document 1: Japanese Patent Application Laid-Open (JP-A) No. 2018-167152.
Patent Document 2: Japanese Patent Application Laid-Open (JP-A) No. 2019-84510.

### SUMMARY OF INVENTION

### Technical Problem

In Patent Documents 1 and 2, the chemicals used for treating used sanitary goods are supplied in the form of a chemical solution in which liquid or powdered chemicals are dissolved, and it is necessary to dissolve the chemicals in advance and stir and mix them. Further, it is necessary to maintain the required amount in the tank.

Further, in Patent Documents 1 and 2, the slaked lime (Ca(OH)₂) used has low solubility in water, and in cases where a high concentration of slaked lime solution is required, it is necessary to perform constant strong stirring in the tank storing the slaked lime to prevent sedimentation.

In Patent Documents 1 and 2, the chemicals for sterilizing and separating used sanitary goods are injected into the rotating drum using a pump from the chemical tank. As a result, the number of equipment increases, and the installation area of the entire used disposable diaper treatment device becomes larger. Further, periodic maintenance of the chemical tank, dissolution device, pump, and other components becomes necessary. Furthermore, when adding chemicals to the chemical tank, it is necessary to perform the operation carefully to avoid chemical burns.

The present invention aims to provide a treatment method for used sanitary goods that may easily and safely treat used sanitary goods using a treatment device with a relatively simple configuration.

### Solution to Problem

The present invention is summarized as follows:
[1] In a treatment method for used sanitary goods using a rotary drum device, the rotary drum device includes:
   a rotating drum accommodating used sanitary goods;
   a water tank portion housing the rotating drum; and
   a water feeder supplying water to the water tank portion.
   The treatment method for used sanitary goods includes:
   supplying used sanitary goods, an individually packaged chemical having a chemical accommodated in a container, and water to the rotating drum, and
   rotating the rotating drum to cause the container to break to let a chemical diffuse within a rotating drum.
[2] In the treatment method for used sanitary goods according to [1], a container of the individually packaged chemical is made of paper or synthetic resin film, and a thickness of paper or synthetic resin film is 0.003 to 1 mm.
[3] In the treatment method for used sanitary goods according to [1], a container of the individually packaged chemical is made of a film of polyethylene, polypropylene, polyester, polystyrene, polyethylene terephthalate, polylactic acid, or polyamide.
[4] In the treatment method for used sanitary goods according to [1], a weight per individually packaged chemical is 100 g to 20 kg.
[5] In the treatment method for used sanitary goods according to [1], the chemical includes a cation, an organic acid, and an inorganic acid.
[6] In the treatment method for used sanitary goods according to [5], the chemical further includes at least one of a sterilizer component and a surfactant.
[7] In the treatment method for used sanitary goods according to any one of [1] to [4], a chemical of the individually packaged chemical includes slaked lime and calcium hypochlorite.

### Effects of Invention

The present invention describes a treatment method for used sanitary goods, in which used sanitary goods, individually packaged chemicals, and water are input into a rotary drum device, and the used sanitary goods are subjected to sterilization, decomposition, and separation treatment.

In the present invention, the addition of chemicals to the chemical tank, dissolution of chemicals, adjustment of pump flow rate, and equipment maintenance become unnecessary, thereby reducing labor. Further, in the present invention, space may be saved as various equipment required for chemical injection becomes unnecessary. In the present invention, since the chemical may be input together with its container, the input operation is easy, and it is possible to input without directly contacting the chemical, thus reducing the risk of chemical burns during operation.

In the present invention, the input amount of the chemical may be easily adjusted by the number of individually packaged chemicals input.

### BRIEF DESCRIPTION OF DRAWINGS

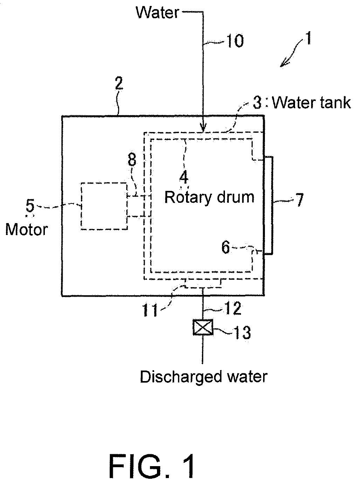

[FIG. 1] is a side view of a rotary drum device used in the embodiment.

### DESCRIPTION OF EMBODIMENTS

The treatment method for used sanitary goods of the present invention includes inputting used sanitary goods, individually packaged chemicals, and water into a rotary drum device, and subjecting the used sanitary goods to sterilization, decomposition, and separation treatment.

It is noted that in the following, used disposable diapers is described as the main example of used sanitary goods. However, the present invention may be applied to various sanitary goods having a synthetic resin film portion and an absorbent portion attached to the film portion, such as urine pads.

The rotary drum device used in the present invention preferably includes a rotating drum accommodating used sanitary goods such as used disposable diapers, a motor configured to rotate this rotating drum, a water tank portion housing this rotating drum and motor and accumulate water inside, and a water feeder supplying water to the water tank portion. Multiple through-holes (water passage holes) are provided in the peripheral wall of the rotating drum.

A blade for breaking the individually packaged chemicals may be provided on the inner surface of the rotating drum.

A passage for discharging water is connected to the bottom portion of the water tank portion. A drain valve is provided in this passage for discharging water, and by closing this drain valve, water may be accumulated inside the water tank portion. By opening the drain valve, the water inside the water tank portion is discharged.

Preferably, the water tank portion is surrounded by a casing, and used sanitary goods and individually packaged chemicals are input through an entrance and exit provided in this casing, and the treated materials are extracted. A door is provided at this entrance and exit.

The individually packaged chemicals are chemicals filled in plastic or paper containers and divided into small portions.

When used disposable diapers and individually packaged chemicals are accommodated in the rotating drum, water is injected, and the rotating drum is rotated, the containers of the individually packaged chemicals break, the chemicals inside the containers flow out, and penetrate the used disposable diapers. Through chemical treatment using the rotary drum device, the disposable diapers decompose into pulp and plastic.

After the treatment of used disposable diapers, the containers of the chemicals remain in the drum and are collected together with the materials derived from the used disposable diapers.

The containers of the individually packaged chemicals are preferably composed of thin materials so that they are easily broken (easily torn) inside the rotating drum. The containers may be soft bags, or they may be shell-like objects with a fixed shape such as tubular, spherical, rectangular parallelepiped, or cubic form.

The materials for the containers of the individually packaged chemicals are preferably synthetic resin, resin-laminated paper, etc. Water-soluble synthetic resins (such as PVA) may also be used as the synthetic resin.

The thickness of the synthetic resin film or paper constituting the containers of the individually packaged chemicals is preferably 0.003 to 1 mm, particularly about 0.003 to 0.3 mm.

In the case where the containers of the individually packaged chemicals are made of synthetic resin materials, any of polyethylene, polypropylene, polyester, polystyrene, polyethylene terephthalate, polylactic acid, or polyamide plastics are preferable, but are not limited thereto. Water-soluble polymers such as polyvinyl alcohol (PVA) may also be used.

To facilitate easy tearing of the containers, perforations (perforation lines) may be pre-made in the containers, or the container may be cut before being input.

In the case of using multiple types of chemicals, the chemicals may be mixed and accommodated in a container, or each chemical may be placed in separate individually packaged chemicals, and the input component ratio may be adjusted by adjusting the number of each individually packaged chemical to be input.

The weight per individually packaged chemical is preferably 0.1 to 20 kg, particularly about 1 to 15 kg.

The method of inputting the individually packaged chemicals or used disposable diapers into the rotary drum device may be any of manual input, input by conveyor, or input by other robots.

The input amount (number of inputs) of the individually packaged chemicals is preferably determined according to the quantity, properties, and types of chemicals of the disposable diapers.

The chemicals may be in liquid form, or may be in powder or granular form.

In the case where the chemical in the individually packaged chemical is in powder form, the particle diameter of the powdered chemical is preferably 5 to 3000 µm, particularly about 5 to 100 µm.

The chemical contains a component that causes water to be discharged (dehydrated) from the superabsorbent polymer (SAP) contained in the disposable diapers. This component preferably contains cations (sodium, calcium, magnesium, etc.), organic acids (citric acid, oxalic acid, etc.), and inorganic acids (nitric acid, sulfuric acid, hydrochloric acid, etc.). As a calcium source, slaked lime, calcium chloride, etc. may be used.

The chemical may contain a sterilizer component to perform sterilization. There is no particular limitation on the sterilizer component, but calcium hypochlorite (bleaching powder) is an inexpensive option.

To promote the decomposition and cleaning of disposable diapers, a surfactant may be used as part of the chemical. Suitable surfactants include linear alkylbenzene-based, higher alcohol-based, α-olefin-based, quaternary ammonium-based, fatty acid-based, and alpha-sulfo fatty acid-based surfactants. It is preferable to use 0.1 to 100 parts by weight, particularly 1 to 10 parts by weight, of surfactant per 100 parts by weight of used disposable diapers.

In one aspect of the present invention, the chemical in the individually packaged chemical consists of slaked lime and calcium hypochlorite, with a mixing ratio of 80 to 98% slaked lime and 20 to 2% calcium hypochlorite. In the case where the chemical in the individually packaged chemical consists of slaked lime and calcium hypochlorite, it is preferable to use 0.1 to 20 parts by weight, particularly 1 to 10 parts by weight, of slaked lime and calcium hypochlorite, and 50 to 1000 parts by weight, particularly 100 to 500 parts by weight, of water per 100 parts by weight of used disposable diapers.

FIG. 1 shows an example of a rotary drum device as a treatment device. This rotary drum device 1 includes a cylindrical water tank 3 as a water tank portion configured inside a casing 2, a rotating drum 4 configured inside the water tank 3, a motor 5 for rotating the rotating drum 4, etc. Multiple small holes are provided on the peripheral surface of the rotating drum 4. Blades for breaking the individually packaged chemicals may be installed on the inner peripheral surface of the rotating drum 4.

An opening 6 is provided on one end face of the casing 2, and a hinged door 7 is attached. The water tank 3 and the rotating drum 4 are arranged with their cylindrical axis in the horizontal direction (or in a diagonal direction with the opening 6 side positioned higher).

The water tank 3 and the motor 5 are supported by supporting members (not shown) to the casing 2. The rotating drum 4 is connected to the motor 5 by a shaft 8. The shaft 8 is supported by a bearing (not shown) to the water tank 3.

A water feeding pipe 10 for supplying clean water such as tap water is connected to the top portion of the water tank 3. A drainage pit 11 is provided at the bottom portion of the water tank 3, and a drainage pipe 12 is connected to the drainage pit 11. A drain valve 13 is provided on the drainage pipe 12. By closing the drain valve 13, water may be accumulated in the water tank 3, and by opening the same, water may be drained from the water tank 3.

To treat used sanitary goods using this rotary drum device 1, the door 7 is opened, and the used sanitary goods and individually packaged chemicals are input into the rotating drum 4, after which the door 7 is closed. After supplying a predetermined amount of water into the water tank 3 through the water feeding pipe 10, the rotating drum 4 is rotated by the motor 5. This causes the individually packaged chemicals to break, allowing the chemicals to diffuse, and the treatment of the used sanitary goods is performed. It is noted that the motor 5 may rotate in only one direction or in a reciprocating (forward and reverse) motion.

After a predetermined time (for example, 0.01 to 5 hours, particularly 0.08 to 2 hours) has elapsed and the treatment has been sufficiently performed, the drain valve 13 is opened to drain the water. At this time, the rotating drum 4 may be rotated at high speed by the motor 5 to dehydrate by centrifugal force.

Subsequently, if necessary, water may be supplied into the water tank 3 from the water feeding pipe 10 to rinse the residue in the rotating drum 4. This rinsing may be performed by supplying water or by accumulating water.

After rinsing is completed, it is preferable to dehydrate, then open the door 7 to remove the contents and send the same to the next treatment process.

It is noted that a hot air drying mechanism may be provided, similar to a rotating drum washing machine, and in this case, the contents may be dried after rinsing. Further, the temperature of the hot air may be increased to heat-sterilize the contents.

### Examples

### [Example 1]

Using the rotary drum device 1 with the configuration shown in FIG. 1, samples consisting of the following disposable diapers were treated using the following individually packaged chemicals.

### <Configuration of the rotating drum device 1>

Water tank 3: diameter 180 cm, length 120 cm
Rotating drum 4: diameter 160 cm, length 110 cm
Small holes in the rotating drum 4: diameter 0.7 cm, opening ratio 15%
Axial direction of the water tank 3 and the rotating drum 4: horizontal
Diameter of the opening 6: 100 cm

### <Disposable diaper sample>

Used disposable diapers were collected from hospital facilities and treated.

### <Individually packaged chemical>

The following chemical was sealed in a polyethylene resin bag (volume 20 L) with a thickness of 800 µm.

### <<Chemical>>

Slaked lime (average particle diameter 100 µm): 12000 g
Calcium hypochlorite: 400 g

### <Treatment procedure>

After inputting 1000 sheets of the above-mentioned disposable diapers and 2 bags of individually packaged chemicals into the rotating drum, the door 7 was closed, and 800 L of tap water was poured in and accumulated.

The rotating drum 4 was rotated at 30 rpm, and the rotation direction was switched every 120 seconds. After starting rotation, steam was injected to raise the water temperature to 80°C, and rotational mixing treatment was performed.

After 30 minutes, the rotating drum 4 was stopped, and after draining, the rotating drum 4 was rotated at 700 rpm for 4 minutes to dehydrate. After stopping the rotating drum 4, 800 L of tap water was poured in and accumulated for rinsing (15 minutes). Then, drainage and dehydration were performed in the same manner as described above. After the dehydration was completed, the door 7 was opened and the contents were taken out. Upon observation, it was found that the adhesive portions between the plastic sheets of the disposable diapers were separated, and the plastic and pulp were in a separated state.

### <Results and Discussion>

In the conventional example, as mentioned earlier, when powdered reagents were not used, a storage tank for liquid chemicals, a chemical injection pump, a dissolution tank for powdered reagents, a stirrer, and a dissolution liquid injection pump were necessary. Especially when slaked lime was used, constant strong stirring was required to prevent sedimentation. Further, for the dissolution of slaked lime, in the case of automatic feeding, a hopper, a cutting device, and a moisture prevention device were necessary. In the case of manual feeding, there was a possibility of causing health damage to workers due to dust dispersion.

In contrast, according to this example, all the disadvantages of the conventional examples were eliminated.

The present invention has been described in detail using specific embodiments, but it is clear to those skilled in the art that various changes are possible within the range where the effects of the invention are achieved.
The present application is based on Japanese Patent Application No. 2022-118123 filed on July 25, 2022, which is incorporated herein by reference in its entirety.

### Reference Signs List

1 Treatment device
2 Casing
3 Water tank
4 Rotating drum
5 Motor
7 Door
10 Water feeding pipe
11 Drainage pit
12 Drainage pipe
13 Drain valve

## Claims

1. A treatment method for used sanitary goods using a rotary drum device, the rotary drum device comprising:
a rotating drum accommodating used sanitary goods;
a water tank portion housing the rotating drum; and
a water feeder supplying water to the water tank portion, and
the treatment method for used sanitary goods comprising:
supplying used sanitary goods, an individually packaged chemical having a chemical accommodated in a container, and water to the rotating drum, and
rotating the rotating drum to cause the container to break to let a chemical diffuse within a rotating drum.

2. The treatment method for used sanitary goods according to claim 1, wherein a container of the individually packaged chemical is made of paper or synthetic resin film, and a thickness of paper or synthetic resin film is 0.003 to 1 mm.

3. The treatment method for used sanitary goods according to claim 1, wherein a container of the individually packaged chemical is made of a film of polyethylene, polypropylene, polyester, polystyrene, polyethylene terephthalate, polylactic acid, or polyamide.

4. The treatment method for used sanitary goods according to claim 1, wherein a weight per individually packaged chemical is 100 g to 20 kg.

5. The treatment method for used sanitary goods according to claim 1, wherein the chemical comprises a cation, an organic acid, and an inorganic acid.

6. The treatment method for used sanitary goods according to claim 5, wherein the chemical further comprises at least one of a sterilizer component and a surfactant.

7. The treatment method for used sanitary goods according to any one of claims 1 to 4, wherein a chemical of the individually packaged chemical comprises slaked lime and calcium hypochlorite.
